# EUROPEAN PATENT SPECIFICATION

(11) **EP 3 289 427 B1**
(45) Date of publication and mention of the grant of the patent: **06.02.2019**
(21) Application number: 16716422.7
(22) Date of filing: 05.04.2016
(51) Int. Cl.: G06F 3/01, G06F 3/041

(54) **INPUT DEVICE HAPTICS AND PRESSURE SENSING**
EINGABEVORRICHTUNGSHAPTIK UND DRUCKSENSOR
HAPTIQUE DE DISPOSITIF D'ENTRÉE ET DÉTECTION DE PRESSION

(30) Priority: 28.04.2015 US 201514698318
(43) Date of publication of application: 07.03.2018
(73) Proprietor: Microsoft Technology Licensing, LLC, Redmond, Washington 98052-6399 (US)
(72) Inventor: WINTER, Andrew E., Redmond, Washington 98052-6399 (US); COX, Brian Rush, Redmond, Washington 98052-6399 (US); GINN, Launnie K. E., Redmond, Washington 98052-6399 (US); WHITT, David Otto, III, Redmond, Washington 98052-6399 (US); FITZ-COY, Aric A., Redmond, Washington 98052-6399 (US); PICCIOTTO, Carl E., Redmond, Washington 98052-6399 (US); YUN, Gahn Gavyn, Redmond, Washington 98052-6399 (US); NELSON, John Jacob, Redmond, Washington 98052-6399 (US)
(74) Representative: Goddar, Heinz J.
(86) International application number: PCT/US2016/025966
(87) International publication number: WO 2016/175986

(56) References cited:
- EP-A2- 2 381 340
- US-A1- 2011 248 930
- US-A1- 2014 232 679
- US-A1- 2014 306 914

## Description

### BACKGROUND

Trackpads may be found on a variety of different devices to support cursor control, such as on a laptop, removable keyboard cover for a tablet, and so on. In some instances, the trackpads also include functionality usable to initiate a selection (e.g., a "click") and thus movement of a cursor and selections may be made by a user without requiring a user to remove a finger from the trackpad to press a separate button.

Conventional techniques used to implement this functionality typically involved a hinged structure and a dome switch. Since these implementations are typically hinged from the top, the response is not uniform and the upper region of the trackpad is difficult to "click." These conventional trackpads also struggle to reject inadvertent actuations when a user is typing, thereby causing a cursor to jump around in a random manner and thus interfere with a user's interaction with a computing device, which is both inefficient and frustrating.

US 2014/0232679 A1 describes systems and methods of defending and/or guarding against inadvertent actuation of a virtual button upon a touch sensitive screen and/or device. A virtual button may be a touch sensor, set of touch sensors and/or touch areas upon a touch screen. The actuation of the virtual button is associated with the execution of a process. The virtual button comprises a first touch area and a second guarding area. Certain touches and other conditions within the first touch area and/or second guarding area are interpreted by the device as either intentional or inadvertent. If the touches are interpreted as inadvertent, then the process associated with the virtual button may be suppressed. One or more piezos are configured to operate as piezo pressure sensing elements and also as haptic feedback elements. The one or more piezos are configured to deform/deflect in response to an applied pressure by the user and the voltage across the piezo is measured so as to e.g. detect a button press. The piezo driver may be activated to give the user haptics feedback -e.g., that the button has been pressed. "Release" of a virtual button by a finger can be detected using capacitive sensors.

EP 2 381 340 A2 describes a haptic device comprising a substrate and a substantially transparent composite piezoelectric cell overlaying the substrate. The piezoelectric cell comprises a sensor piezoelectric layer configured to generate a first signal when the sensor piezoelectric layer is deformed and an actuator piezoelectric layer configured to provide a haptic effect upon receipt of a second signal that is based on the first signal. The substantially transparent composite piezoelectric cell is configured to measure a deformation of a surface of the cell and to provide a haptic feedback effect as a result of the deformation.

US 2011/0248930 A1 describes a method that includes detecting a touch at a touch location on a touch-sensitive display of an electronic device, identifying a first tactile feedback associated with the touch location, and providing the first tactile feedback in response to determining that a force value related to the touch meets a first threshold value.

### SUMMARY

The invention is defined by independent claim 1. Advantageous embodiments of the invention are subject to the dependent claims.

Input device haptics and pressure sensing techniques are described in this disclosure. According to the invention, an input device includes an outer surface, a pressure sensor and haptic feedback mechanism, and a pressure sensing and haptic feedback module. The outer surface is configured to receive an application of pressure by an object. The pressure sensor and haptic feedback mechanism has one or more piezos configured to detect and quantify an amount of the application of the pressure to the outer surface by the object, the one or more piezos configured to output one or more signals indicating the quantified amount of the pressure. The pressure sensing and haptic feedback module is configured to receive the one or more signals from the one or more piezos indicating the quantified amount of the pressure and to control the haptic feedback of the pressure sensor and haptic feedback mechanism by energizing the one or more piezos based at least in part of the quantified amount of pressure. The pressure sensing and haptic feedback module includes a capacitor that takes as an input the one or more signals from the plurality of piezos. The capacitor is configured to be reset to address voltage decay of the one or more signals using a stored voltage offset by the pressure sensing and haptic feedback module.

In one or more examples, a trackpad system includes an outer surface configured to receive an application of pressure by an object and detect movement of the object in relation to the outer surface, the detected movement usable to control a cursor of a computing device; a pressure sensor and haptic feedback mechanism having a plurality of piezos that suspend the outer surface and are configured to detect and quantify an amount of the application of the pressure to the outer surface by the object, the pressure sensor and
haptic feedback mechanism configured to output one or more signals indicating the quantified amount of the pressure; and a pressure sensing module configured to receive the one or more signals from the pressure sensors indicating the quantified amount of the pressure by the one or more piezos and control the haptic feedback of the haptic feedback mechanism by energizing the one or more piezos based at least in part of the quantified amount of pressure.

In one or more examples, an input device includes an outer surface configured to receive an application of pressure by an object, a pressure sensor configured to detect and quantify an amount of the application of the pressure to the outer surface by the object, the pressure sensor configured to output a signal indicating the quantified amount of the pressure, a haptic feedback mechanism configured to provide haptic feedback using at least one piezo, and a pressure sensing module configured to receive the signal from the pressure sensors indicating the quantified amount of the pressure and control the haptic feedback of the haptic feedback mechanism by energizing the at least one piezo based at least in part of the quantified amount of pressure.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items. Entities represented in the figures may be indicative of one or more entities and thus reference may be made interchangeably to single or plural forms of the entities in the discussion.
FIG. 1 is an illustration of an environment in an example implementation that is operable that is operable to employ the input device haptics and pressure sensing techniques described herein.
FIG. 2 depicts an example implementation of an input device of FIG. 1 as showing a flexible hinge and trackpad in greater detail.
FIG. 3 depicts an example of a pressure sensor and haptic feedback mechanism of FIG. 2 as employing piezos to detect pressure and/or provide haptic feedback.
FIG. 4 depicts an example circuit model of a piezo of FIG. 3.
FIG. 5 depicts a cross section view of pressure sensor and haptic feedback mechanisms of FIG. 2.
FIG. 6 depicts a cross section view of pressure sensor and haptic feedback mechanisms of FIG. 2 as involving negative voltages.
FIG. 7 depicts a circuit in an example implementation that is configured to read bipolar voltages.
FIG. 8 depicts an example implementation of a circuit usable to energize piezos using a bridge circuit.
FIG. 9 depicts an example of a waveform used to drive the circuit shown in FIG. 9.
FIG. 10 is a flow diagram depicting a procedure in an example implementation in which piezos are used to detect pressure and provide haptic feedback.
FIG. 11 illustrates an example system including various components of an example device that can be implemented as any type of computing device as described with reference to FIGS. 1-10 to implement embodiments of the techniques described herein.

### DETAILED DESCRIPTION

### Overview

Conventional techniques used to support tactile feedback when "clicking" a trackpad suffered from inadvertent actuations, lack of uniformity in the response, and so forth. Consequently, these conventional techniques could interfere with a user's experience when interacting with the trackpad to input data using the trackpad itself and even a keyboard associated with the trackpad.

Input device haptics and pressure sensing techniques are described. In one or more implementations, an input device such as a trackpad, key of a keyboard, and so forth is configured to support haptics and/or pressure sensing. For example, piezos may be arranged at the corners of a trackpad and as such suspend the trackpad. When a pressure is detected (e.g., a user pressing a surface of the trackpad with a finger), the piezos are energized to provide haptic feedback that may be felt by the user.

Additionally, the piezos may also be utilized to detect the pressure itself, such as to monitor an output voltage of the piezos generated due to strain caused by the pressure to the piezos. In this way, inadvertent clicks may be avoided with a uniform response over an entirety of a surface of the trackpad. A variety of other examples are also contemplated, such as to address voltage decay, bipolar voltages, and so on as described in the following sections and shown in corresponding figures.

In the following discussion, an example environment is first described that may employ the techniques described herein. Example procedures are then described which may be performed in the example environment as well as other environments. Consequently, performance of the example procedures is not limited to the example environment and the example environment is not limited to performance of the example procedures as further described below.

### Example Environment

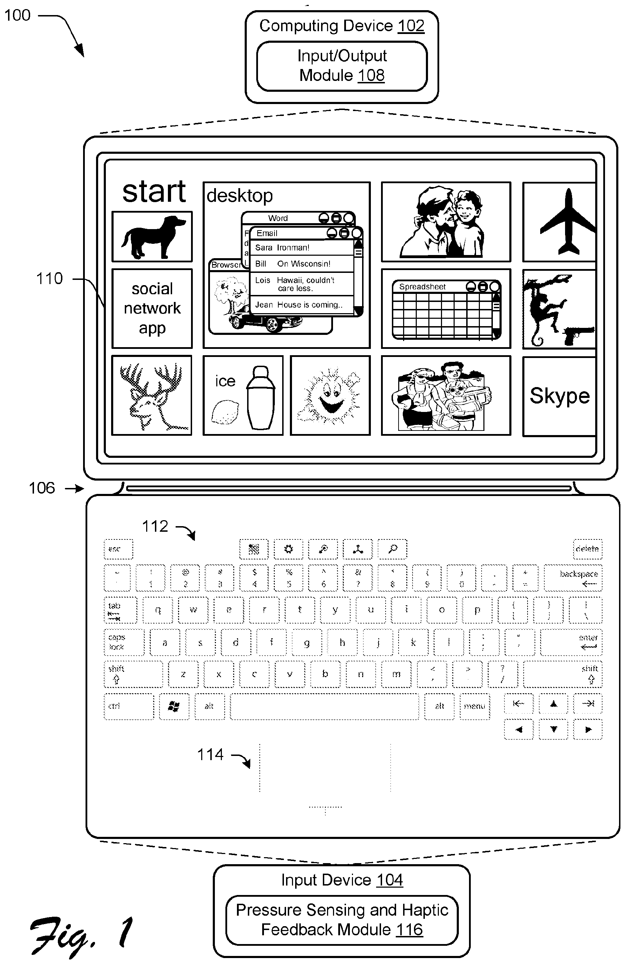

FIG. 1 is an illustration of an environment 100 in an example implementation that is operable to employ the input device haptics and pressure sensing techniques described herein. The illustrated environment 100 includes an example of a computing device 102 that is physically and communicatively coupled to an input device 104 via a flexible hinge 106. The computing device 102 may be configured in a variety of ways. For example, the computing device 102 may be configured for mobile use, such as a mobile phone, a tablet computer as illustrated, and so on. Thus, the computing device 102 may range from full resource devices with substantial memory and processor resources to a low-resource device with limited memory and/or processing resources. The computing device 102 may also relate to software that causes the computing device 102 to perform one or more operations.

The computing device 102, for instance, is illustrated as including an input/output module 108. The input/output module 108 is representative of functionality relating to processing of inputs and rendering outputs of the computing device 102. A variety of different inputs may be processed by the input/output module 108, such as inputs relating to functions that correspond to keys of the input device 104, keys of a virtual keyboard displayed by the display device 110 to identify gestures and cause operations to be performed that correspond to the gestures that may be recognized through the input device 104 and/or touchscreen functionality of the display device 110, and so forth. Thus, the input/output module 108 may support a variety of different input techniques by recognizing and leveraging a division between types of inputs including key presses, gestures, and so on.

In the illustrated example, the input device 104 is configured as having an input portion that includes a keyboard 112 having a QWERTY arrangement of keys and track pad 114 although other arrangements of keys are also contemplated. Further, other nonconventional configurations are also contemplated, such as a game controller, configuration to mimic a musical instrument, and so forth. Thus, the input device 104 and keys incorporated by the input device 104 may assume a variety of different configurations to support a variety of different functionality.

As previously described, the input device 104 is physically and communicatively coupled to the computing device 102 in this example through use of a flexible hinge 106. The flexible hinge 106 is flexible in that rotational movement supported by the hinge is achieved through flexing (e.g., bending) of the material forming the hinge as opposed to mechanical rotation as supported by a pin, although that embodiment is also contemplated. Further, this flexible rotation may be configured to support movement in one or more directions (e.g., vertically in the figure) yet restrict movement in other directions, such as lateral movement of the input device 104 in relation to the computing device 102. This may be used to support consistent alignment of the input device 104 in relation to the computing device 102, such as to align sensors used to change power states, application states, and so on.

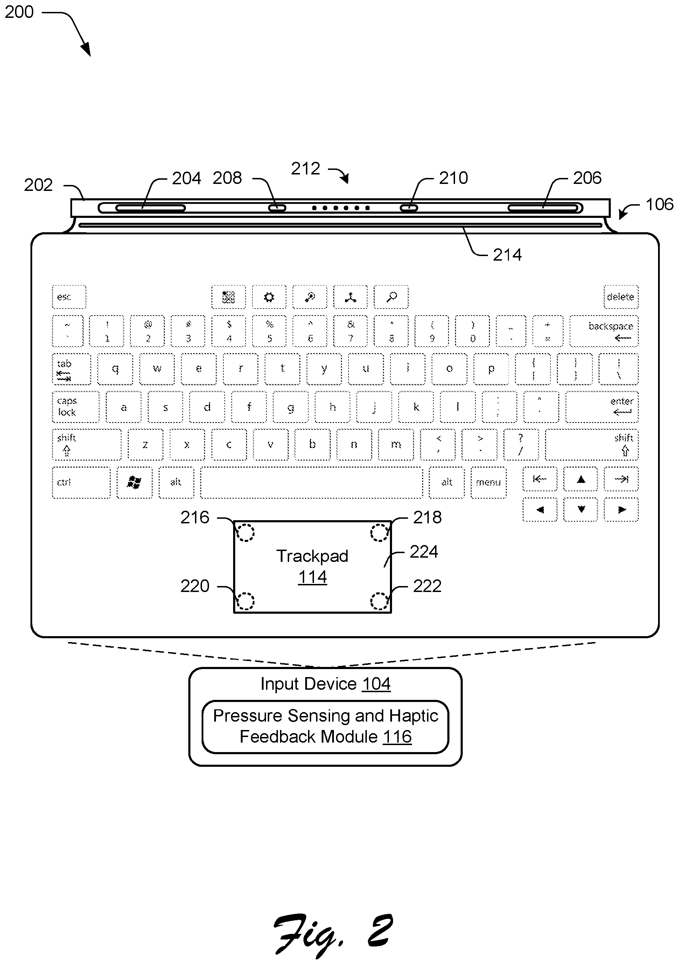

The flexible hinge 106, for instance, may be formed using one or more layers of fabric and include conductors formed as flexible traces to communicatively couple the input device 104 to the computing device 102 and vice versa. This communication, for instance, may be used to communicate a result of a key press to the computing device 102, receive power from the computing device, perform authentication, provide supplemental power to the computing device 102, and so on. The flexible hinge 106 may be configured in a variety of ways, further discussion of which may be found in relation to FIG. 2.

The input device is also illustrated as including a pressure sensing and haptic feedback module 116 that is representative of functionality to detect pressure and supply haptic feedback in response to the detected pressure. A user, for instance, may press the trackpad with a finger and in response receive haptic feedback. This may be performed in a variety of ways, an example of which is described in the following and shown in a corresponding figure.

FIG. 2 depicts an example implementation 200 of the input device 104 of FIG. 1 as showing the flexible hinge 106 and trackpad 114 in greater detail. In this example, a connection portion 202 of the input device is shown that is configured to provide a communicative and physical connection between the input device 104 and the computing device 102. The connection portion 202 as illustrated has a height and cross section configured to be received in a channel in the housing of the computing device 102, although this arrangement may also be reversed.

The connection portion 202 is flexibly connected to a portion of the input device 104 that includes the keys through use of the flexible hinge 106. Thus, when the connection portion 202 is physically connected to the computing device the combination of the connection portion 202 and the flexible hinge 106 supports movement of the input device 104 in relation to the computing device 102 that is similar to a hinge of a book. Through this rotational movement, a variety of different orientations of the input device 104 in relation to the computing device 102 may be supported, such as to act to cover the display device 110 of FIG. 1, be disposed behind the housing of the computing device 102, and so forth.

The connection portion 202 is illustrated in this example as including magnetic coupling devices 204, 206, mechanical coupling protrusions 208, 210, and a plurality of communication contacts 212. Although physical contacts 212 are shown in this example, wireless communication techniques are also contemplated, e.g., NFC, Bluetooth®, and so forth. The magnetic coupling devices 204, 206 are configured to magnetically couple to complementary magnetic coupling devices of the computing device 102 through use of one or more magnets. In this way, the input device 104 may be physically secured to the computing device 102 through use of magnetic attraction.

The connection portion 202 also includes mechanical coupling protrusions 208, 210 to form a mechanical physical connection between the input device 104 and the computing device 102. The mechanical coupling protrusions 208, 210 are configured to permit removal of the input device 104 along a plane following a height of the protrusions and restrict removal through mechanical binding along other planes. A mid-spine 214 is also included to support mechanical stiffness and a minimum bend radius of the flexible hinge 106.

The input device 104 also includes a keyboard 112 and trackpad 114 as previously described. Although the pressure sensing and haptic feedback techniques are
described in relation to the trackpad 114 in the following, these techniques are equally applicable to keys of the keyboard 112.

The trackpad 114 in the illustrated example is formed as a rectangle having four corners, although other shapes are also contemplated. Pressure sensor and haptic feedback mechanisms 216, 218, 220, 222 are disposed at respective corners to suspend an outer surface 224 of the trackpad 114. The pressure sensor and haptic feedback mechanisms 216-222 are configured to provide haptic feedback based at least in part on sensed amounts of pressure. As such, the pressure sensor and haptic feedback mechanisms 216-222 may be configured in a variety of ways, an example of which is described in the following and shown in a corresponding figure.

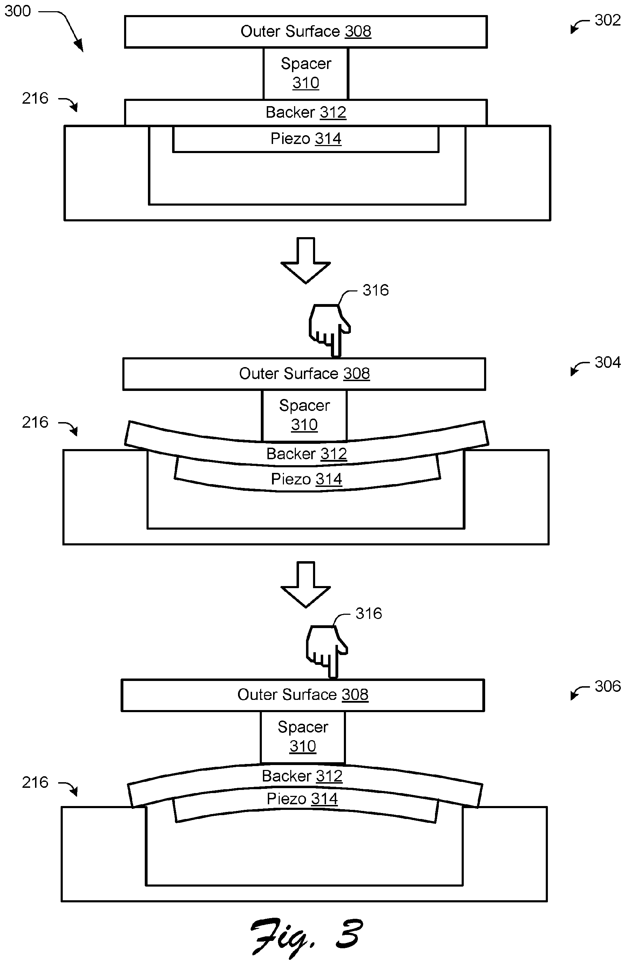

FIG. 3 depicts an example 300 of a pressure sensor and haptic feedback mechanism 216 of FIG. 2 as employing piezos to detect pressure and/or provide haptic feedback. This example is illustrated using first, second, and third stages 302, 304, 306. The pressure sensor and haptic feedback mechanism 216 includes an outer surface 308, such as an outer surface 308 of the trackpad, a key of a keyboard, and so forth. The outer surface 308 may be formed from a variety of different materials and combinations thereof, such as a glass, plastic, a laminate structure, include a fabric outer layer, and so forth.

The outer surface 308 is coupled mechanically to a spacer 310 that is coupled mechanically to a backer 312. The spacer 310 is configured to channel pressure applied to the outer surface 310 to a central region of the backer 312 and thus a piezo 314 connected thereto. In this way, an amount of deflection of the backer 312 and corresponding piezo 314 is increased in response to the pressure even on "off center" presses, thereby supporting a greater sensitivity to detection of an amount of pressure and haptic response.

The backer 312 is formed from a rigid material (e.g., steel, plastic, and the like) and physically coupled to the piezo 314. Accordingly, when a pressure is not applied to the outer surface 308 (and thus no pressure is applied to the backer 312) the piezo 314 is not strained and as such does not output a voltage as shown at the first stage 302. At the second stage 304, an object 316 such as a finger of a user's hand (not shown in scale) as part of pressing down on the outer surface 316 applies a pressure that causes deflection of the backer 312 and thus strain on the piezo 314 which results in an output voltage which is detectable by the pressure sensing and haptic feedback module 116.

As the voltage output by the piezo 314 changes with an amount of pressure applied, the piezo 314 is configured to detect not just presence or absence or pressure, but also an amount of pressure, e.g., a respective one of a plurality of levels of pressure. The piezo 314 is configurable in a variety of ways, such as formed at least in part from a piezo ceramic material, PZT, electroactive polymer, or electromechanical polymer. Other techniques to detect pressure are also contemplated, such as FSRs, changing in capacitance, changes in detect contact size, strain gauges, piezo-resistive elements, and so on.

The piezo 314 is also usable to provide a haptic feedback as shown at the third stage 306. Continuing with the previous example in the second stage 304, the piezo 314 detects an amount of pressure applied to the outer surface 308 by the finger of the user's hand. If the detected pressure is over a threshold, the pressure sensing and haptic feedback module 116 energizes the piezo 314. This causes the piezo 314 to pull against the backer 312 and thus deflect outward back toward an object 316 applying the pressure, thereby providing a haptic response.

In this way, the piezo 314 is leveraged to provide both pressure sensing and haptic feedback. Other examples are also contemplated. For instance, pressure may be sensed by a pressure sensor that is not the piezo and then the piezo may be used to provide haptic feedback. In another instance, a first piezo may be used to detect pressure and another piezo may be used to provide haptic feedback.

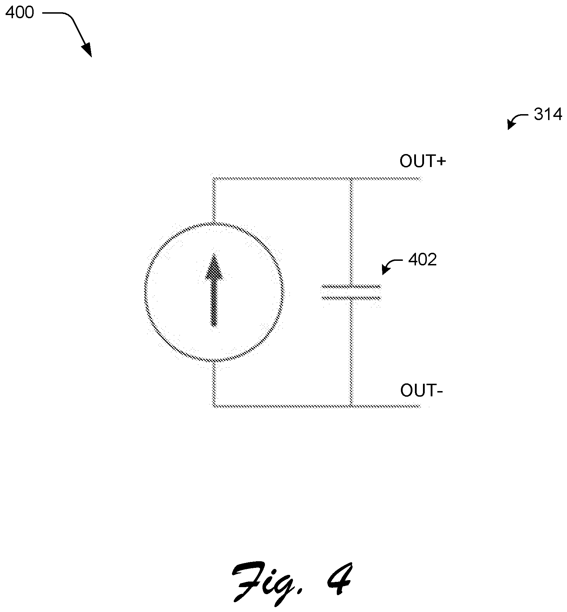

FIG. 4 depicts an example circuit model 400 of the piezo 314 of FIG. 3. When the piezo 314 deflects as shown in the second stage 304 of FIG. 3, a current is generated, which then charges its intrinsic capacitance as well as any externally applied capacitance. The voltage across the capacitor 402 can then be read by the pressure sensing and haptic feedback module 116 as an indication of deflection, and thus applied pressure.

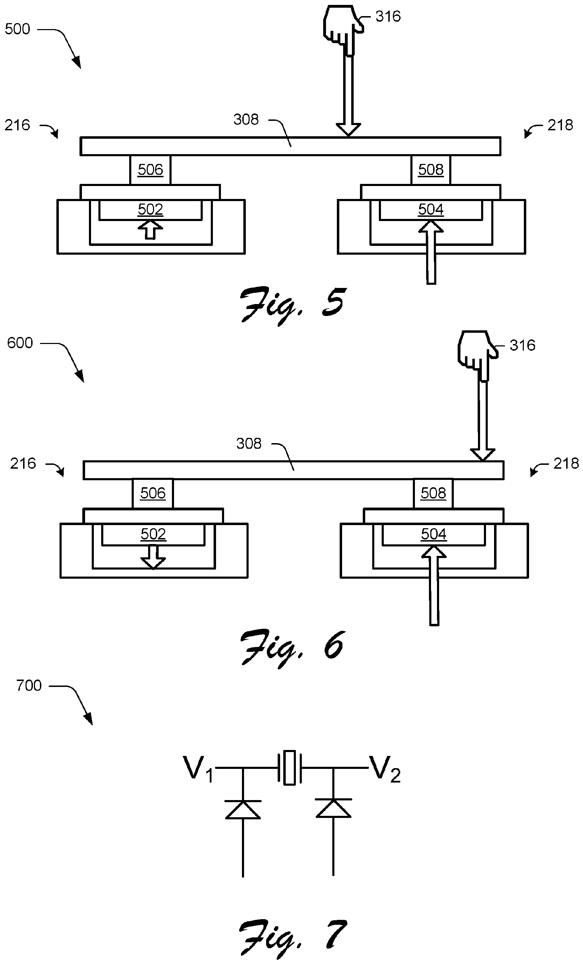

FIG. 5 depicts a cross section view 500 of pressure sensor and haptic feedback mechanisms 216, 218 of FIG. 2. When there are multiple pressure sensor and haptic feedback mechanisms 216-222 as shown in FIG. 2, measures of signals generated by the mechanisms may be taken in a variety of different ways. For example, each of the mechanisms may be measured individually, which may be used to calculate a location (e.g., centroid) of an object that applies the pressure in relation to the outer surface 308, e.g., through triangulation.

In another example, the signal is derived by summing signals from all of the pressure sensor and haptic feedback mechanisms 216-222, i.e., the piezos of these mechanisms. As shown in FIG. 5, for instance, an object 216 applies pressure that is detected by respective piezos 502, 504 of respective pressure sensor and haptic feedback mechanisms 216, 218. The pressure is applied by the object 316 in this example between spacers 506, 508 of the mechanisms. Arrows are utilized to indicate application of the pressure by the object 316 and respective amounts of the pressure sensed by the piezos 502, 504. As illustrated, the piezo 504 closest to a location at which the pressure is applied receives a larger amount of the pressure than the piezo 502 that is located further away. By summing the responses of the piezos in this example, the amount of pressure applied by the object 316 is detected.

FIG. 6 depicts a cross section view 600 of pressure sensor and haptic feedback mechanisms 216, 218 of FIG. 2 as involving negative voltages. In this example, the object 316 applies pressure to an area of the outer surface 308 that is not positioned between the spacers 506, 508 of the pressure sensor and haptic feedback mechanisms 216, 218. This causes the piezo 502 to "lift up" and exhibit a negative voltage while the piezo 504 measures a positive voltage. In this example, the voltages from the piezos 502, 504 are still summed to detect the amount of pressure applied by the object 316 as the amount of pressure detected by the piezo 504 more than compensates for the negative amount of pressure detected by the piezo 502.

Returning again to FIG. 4, techniques are employed to reduce an effect of charge leakage. Once charged, the capacitor 402 slowly leaks away charge. Accordingly, if a user wants to perform a "push and hold" gesture, the voltage may slowly drain away to the point where the system could believe that a user has lifted their finger away from the outer surface, even though the finger is applying a relatively constant amount of pressure. By periodically discharging the capacitor 402 and storing pressure offsets (e.g., by the pressure sensing and haptic feedback module 116), this issue of decay can be avoided.

For example, when a piezo is unmoving, current does not flow and the voltage is held. At any time, the capacitor 402 of the circuit 400 can be discharged by an external circuit, e.g., by the pressure sensing and haptic feedback module 116. Any additional deflection, whether positive or negative, for the piezo will then charge the capacitor from its discharged state.

One example of such a sequence is for a finger to apply a pressure to a piezo and hold, causing the piezo to generate a signal of "X" volts, which is stored as an off-set. The capacitor 402 is then discharged by an external circuit (e.g., pressure sensing and haptic feedback module 116) such that the piezo voltage is now "0." Accordingly, the piezo voltage is now zero volts, but the "X" offset is remembered and stored in "Y" such that pressure now equals a currently read voltage plus a value stored in "Y." Therefore, if the finger ceases application of pressure (i.e., releases the piezo) and the piezo relaxes to a rest deflection, the piezo voltage is now "-X" volts. With the stored away offset, however, the pressure is read as zero by the pressure sensing and haptic feedback module 116. The capacitor 402 is discharged again and zero is stored as the new offset.

In one or more implementations, discharge of the capacitor 402 is managed to occur when above a threshold voltage and when pressure has been relatively constant for a defined amount of time. In this way, risk of injecting noise into the pressure signal is minimized.

In order to provide haptic feedback as previously described, the pressure sensing and haptic feedback module 116 energizes the piezos, e.g., through application of +/- one hundred volts. However, after the piezos are energized the amount of voltage remaining in the piezos is random. Accordingly, in order to continue to use the piezos for pressure sensing after a haptic event, an amount of pressure is detected and stored in an offset that includes a sum of a piezo voltage "X" and accumulated offsets "Y" as described above.

The haptic event is performed by energizing the piezos by the pressure sensing and haptic feedback module 116. The piezos are cleared and a waiting period is undertaken for an amount of time in order to settle voltages of the piezos. The voltage is then read, and the offset "Y" is set such that a read-back pressure matches a pressure before the haptic event. Accordingly, in this example an assumption is made that the pressure going into a haptic event matches the pressure coming out of the haptic event such that after the haptic event the pressure is recalibrated to match the previous pressure before the event.

To keep the system calibrated, the pressure sensing and haptic feedback module 116 may zero the piezos by defining a read-back voltage as zero pressure, which optionally involves clearing the piezos when it is sensed that the pressure is removed, e.g., the object is lifted from the outer surface. This lifting may be detected using sensors (e.g., capacitive sensors) of the trackpad that are used to detect movement and location.

FIG. 7 depicts a circuit 700 in an example implementation that is configured to read bipolar voltages. As described in relation to FIG. 6 above, in some instances positive and negative voltages may be detected by the pressure sensor and haptic feedback mechanisms 216, 218. In order to establish a zero point as actually occurring at a zero voltage, the voltage is measure differentially using diodes as shown in the circuit 700 of FIG. 7. An ADC may be connected to either terminal, which may be represented as capacitors to ground.

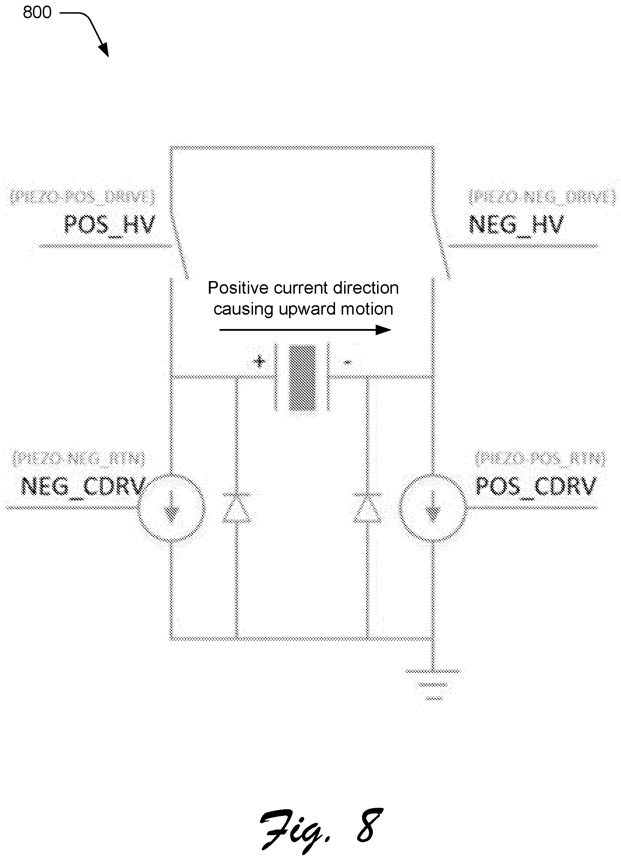

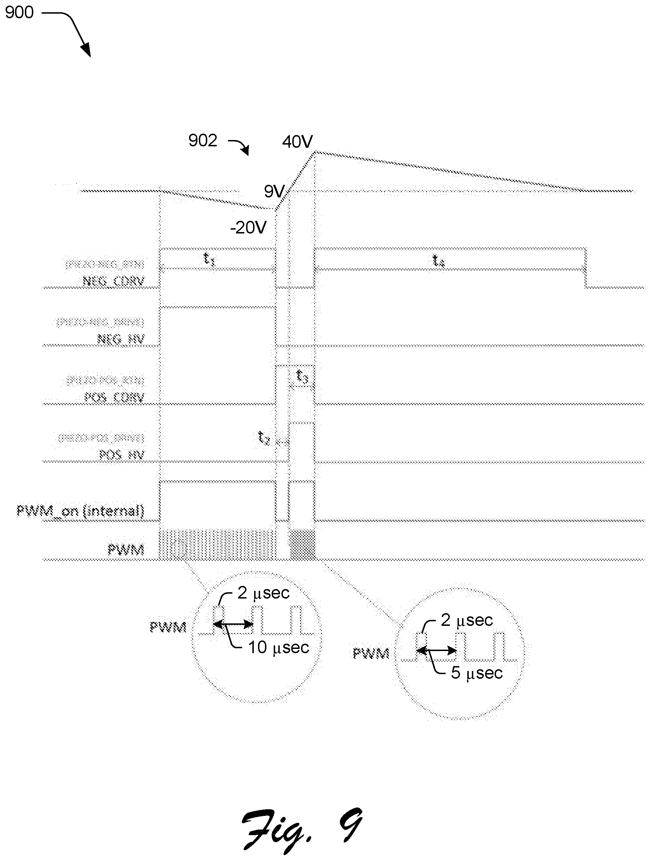

FIG. 8 depicts an example implementation of a circuit 800 usable to energize piezos using a bridge circuit. An example of a waveform 900 used to drive the circuit 800 is shown in FIG. 9. The haptic response (i.e., the "click sensation") occurs at a rapid ramp up 902 portion of the waveform 900 at times "t2" and "t3." In this way, piezos may be used to detect applied pressure and provide haptic feedback, further discussion of which is included in the following procedure.

### Example Procedures

The following discussion describes haptic and pressure sensing techniques that may be implemented utilizing the previously described systems and devices. Aspects of each of the procedures may be implemented in hardware, firmware, or software, or a combination thereof. The procedures are shown as a set of blocks that specify operations performed by one or more devices and are not necessarily limited to the orders shown for performing the operations by the respective blocks. In portions of the following discussion, reference will be made to the figures described above.

Functionality, features, and concepts described in relation to the examples of FIGS. 1-9 may be employed in the context of the procedures described herein. Further, functionality, features, and concepts described in relation to different procedures below may be interchanged among the different procedures and are not limited to implementation in the context of an individual procedure. Moreover, blocks associated with different representative procedures and corresponding figures herein may be applied together and/or combined in different ways. Thus, individual functionality, features, and concepts described in relation to different example environments, devices, components, and procedures herein may be used in any suitable combinations and are not limited to the particular combinations represented by the enumerated examples.

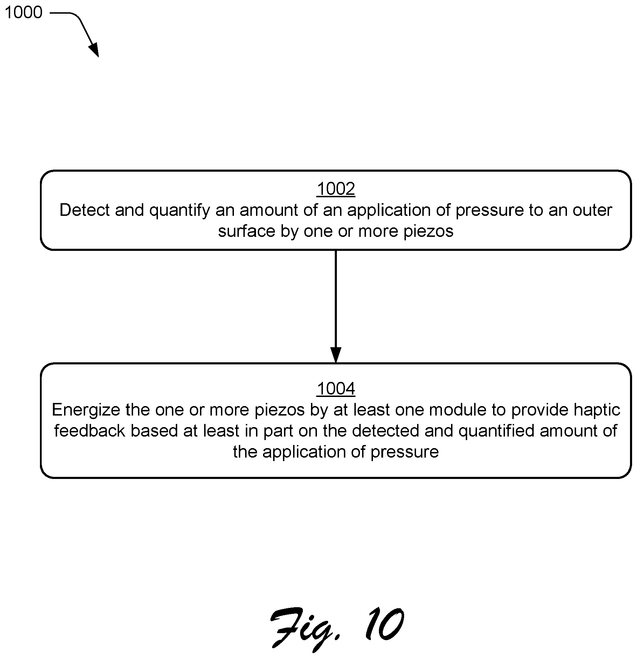

FIG. 10 depicts a procedure 1000 in an example implementation in which piezos are used to detect pressure and provide haptic feedback. An amount of an application of pressure to an outer surface is detected and quantified by one or more piezos (block 1002). The one or more piezos are energized by at least one module to provide haptic feedback based at least in part on the detected and quantified amount of the application of pressure (block 1004). A variety of other examples are also contemplated.

### Example System and Device

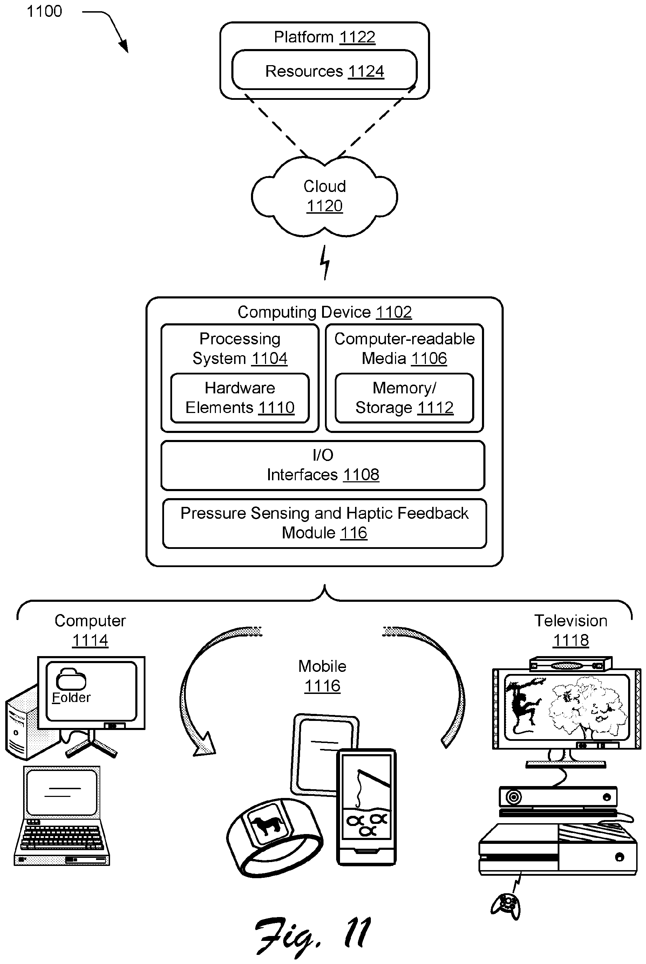

FIG. 11 illustrates an example system generally at 1100 that includes an example computing device 1102 that is representative of one or more computing systems and/or devices that may implement the various techniques described herein. This is illustrated through inclusion of the pressure sensing and haptic feedback module 116. The computing device 1102 may be, for example, a server of a service provider, a device associated with a client (e.g., a client device), an on-chip system, and/or any other suitable computing device or computing system.

The example computing device 1102 as illustrated includes a processing system 1104, one or more computer-readable media 1106, and one or more I/O interface 1108 that are communicatively coupled, one to another. Although not shown, the computing device 1102 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 1104 is representative of functionality to perform one or more operations using hardware. Accordingly, the processing system 1104 is illustrated as including hardware element 1110 that may be configured as processors, functional blocks, and so forth. This may include implementation in hardware as an application specific integrated circuit or other logic device formed using one or more semiconductors. The hardware elements 1110 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable storage media 1106 is illustrated as including memory/storage 1112. The memory/storage 1112 represents memory/storage capacity associated with one or more computer-readable media. The memory/storage component 1112 may include volatile media (such as random access memory (RAM)) and/or nonvolatile media (such as read only memory (ROM), Flash memory, optical disks, magnetic disks, and so forth). The memory/storage component 1112 may include fixed media (e.g., RAM, ROM, a fixed hard drive, and so on) as well as removable media (e.g., Flash memory, a removable hard drive, an optical disc, and so forth). The computer-readable media 1106 may be configured in a variety of other ways as further described below.

Input/output interface(s) 1108 are representative of functionality to allow a user to enter commands and information to computing device 1102, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which may employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 1102 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 1102. By way of example, and not limitation, computer-readable media may include "computer-readable storage media" and "computer-readable signal media."

"Computer-readable storage media" may refer to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" may refer to a signal-bearing medium that is configured to transmit instructions to the hardware of the computing device 1102, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 1110 and computer-readable media 1106 are representative of modules, programmable device logic and/or fixed device logic implemented in a hardware form that may be employed in some embodiments to implement at least some aspects of the techniques described herein, such as to perform one or more instructions. Hardware may include components of an integrated circuit or on-chip system, an application-specific integrated circuit (ASIC), a field-programmable gate array (FPGA), a complex programmable logic device (CPLD), and other implementations in silicon or other hardware. In this context, hardware may operate as a processing device that performs program tasks defined by instructions and/or logic embodied by the hardware as well as a hardware utilized to store instructions for execution, e.g., the computer-readable storage media described previously.

Combinations of the foregoing may also be employed to implement various techniques described herein. Accordingly, software, hardware, or executable modules may be implemented as one or more instructions and/or logic embodied on some form of computer-readable storage media and/or by one or more hardware elements 1110. The computing device 1102 may be configured to implement particular instructions and/or functions corresponding to the software and/or hardware modules. Accordingly, implementation of a module that is executable by the computing device 1102 as software may be achieved at least partially in hardware, e.g., through use of computer-readable storage media and/or hardware elements 1110 of the processing system 1104. The instructions and/or functions may be executable/operable by one or more articles of manufacture (for example, one or more computing devices 1102 and/or processing systems 1104) to implement techniques, modules, and examples described herein.

As further illustrated in FIG. 11, the example system 1100 enables ubiquitous environments for a seamless user experience when running applications on a personal computer (PC), a television device, and/or a mobile device. Services and applications run substantially similar in all three environments for a common user experience when transitioning from one device to the next while utilizing an application, playing a video game, watching a video, and so on.

In the example system 1100, multiple devices are interconnected through a central computing device. The central computing device may be local to the multiple devices or may be located remotely from the multiple devices. In one embodiment, the central computing device may be a cloud of one or more server computers that are connected to the multiple devices through a network, the Internet, or other data communication link.

In one embodiment, this interconnection architecture enables functionality to be delivered across multiple devices to provide a common and seamless experience to a user of the multiple devices. Each of the multiple devices may have different physical requirements and capabilities, and the central computing device uses a platform to enable the delivery of an experience to the device that is both tailored to the device and yet common to all devices. In one embodiment, a class of target devices is created and experiences are tailored to the generic class of devices. A class of devices may be defined by physical features, types of usage, or other common characteristics of the devices.

In various implementations, the computing device 1102 may assume a variety of different configurations, such as for computer 1114, mobile 1116, and television 1118 uses. Each of these configurations includes devices that may have generally different constructs and capabilities, and thus the computing device 1102 may be configured according to one or more of the different device classes. For instance, the computing device 1102 may be implemented as the computer 1114 class of a device that includes a personal computer, desktop computer, a multi-screen computer, laptop computer, netbook, and so on.

The computing device 1102 may also be implemented as the mobile 1116 class of device that includes mobile devices, such as a mobile phone, wearables (e.g., wrist bands, pendants, rings, etc.) portable music player, portable gaming device, a tablet computer, a multi-screen computer, and so on. The computing device 1102 may also be implemented as the television 1118 class of device that includes devices having or connected to generally larger screens in casual viewing environments. These devices include televisions, set-top boxes, gaming consoles, and so on. Other devices are also contemplated, such as appliances, thermostats and so on as part of the "Internet of Things."

The techniques described herein may be supported by these various configurations of the computing device 1102 and are not limited to the specific examples of the techniques described herein. This functionality may also be implemented all or in part through use of a distributed system, such as over a "cloud" 1120 via a platform 1122 as described below.

The cloud 1120 includes and/or is representative of a platform 1122 for resources 1124. The platform 1122 abstracts underlying functionality of hardware (e.g., servers) and software resources of the cloud 1120. The resources 1124 may include applications and/or data that can be utilized while computer processing is executed on servers that are remote from the computing device 1102. Resources 1124 can also include services provided over the Internet and/or through a subscriber network, such as a cellular or Wi-Fi network.

The platform 1122 may abstract resources and functions to connect the computing device 1102 with other computing devices. The platform 1122 may also serve to abstract scaling of resources to provide a corresponding level of scale to encountered demand for the resources 1124 that are implemented via the platform 1122. Accordingly, in an interconnected device embodiment, implementation of functionality described herein may be distributed throughout the system 1100. For example, the functionality may be implemented in part on the computing device 1102 as well as via the platform 1122 that abstracts the functionality of the cloud 1120.

### Conclusion and Example Implementations

Example implementations described herein include, but are not limited to, one or any combinations of one or more of the following examples:

In one or more examples, an input device includes an outer surface, a pressure sensor and haptic feedback mechanism, and a pressure sensing and haptic feedback module. The outer surface is configured to receive an application of pressure by an object. The pressure sensor and haptic feedback mechanism has one or more piezos configured to detect and quantify an amount of the application of the pressure to the outer surface by the object, the one or more piezos configured to output a signal indicating the quantified amount of the pressure. The pressure sensing and haptic feedback module is configured to receive the signal from the one or more piezos indicating the quantified amount of the pressure and control the haptic feedback of the pressure sensor and haptic feedback mechanism by energizing the one or more piezos based at least in part of the quantified amount of pressure.

An example as described alone or in combination with any of the other examples described above or below, wherein the pressure sensor and haptic feedback mechanism includes a backer that deflects in response to a pulling motion of the one or more piezos due to the energizing of the one or more piezos.

An example as described alone or in combination with any of the other examples described above or below, further comprising a spacer configured to route the amount of pressure applied to the outer surface for application at a generally central region of the backer.

An example as described alone or in combination with any of the other examples described above or below, wherein the outer surface is formed as part of a trackpad that includes one or more sensors disposed thereon that are configured to detect proximity and movement of the object in relation to the outer surface.

An example as described alone or in combination with any of the other examples described above or below, wherein the one or more piezos are formed at least in part from a piezo ceramic material, PZT, electroactive polymer, or electromechanical polymer.

An example as described alone or in combination with any of the other examples described above or below, wherein the pressure sensing module includes a capacitor that takes as an input the signal from the one or more piezos, the capacitor is configured to be reset to address voltage decay of the signal using a stored voltage offset by the pressure sensing and haptic feedback module.

In one or more examples, a trackpad system includes an outer surface configured to receive an application of pressure by an object and detect movement of the object in relation to the outer surface, the detected movement usable to control a cursor of a computing device; a pressure sensor and haptic feedback mechanism having a plurality of pressure sensors that suspend the outer surface and are configured to detect and quantify an amount of the application of the pressure to the outer surface by the object, the pressure sensor and haptic feedback mechanism configured to output one or more signals indicating the quantified amount of the pressure; and a pressure sensing module configured to receive the one or more signals from the plurality of pressure sensors indicating the quantified amount of the pressure by the one or more piezos and control haptic feedback of the haptic feedback mechanism by energizing one or more piezos based at least in part on the quantified amount of pressure.

An example as described alone or in combination with any of the other examples described above or below, wherein the plurality of pressure sensors utilize the one or more piezos to detect and quantify the amount of the application of pressure.

An example as described alone or in combination with any of the other examples described above or below, wherein the one or more signals are summed from the plurality of pressure sensors.

An example as described alone or in combination with any of the other examples described above or below, wherein the one or more signals are received individually by the pressure sensing module from respective ones of the plurality of pressure sensors.

An example as described alone or in combination with any of the other examples described above or below, wherein the individually received signals are usable to determine a relative location of the object in relation to the outer surface by the pressure sensing module.

An example as described alone or in combination with any of the other examples described above or below, wherein the individually received signals include bipolar voltages that are measured differentially using diodes of the pressure sensing module.

An example as described alone or in combination with any of the other examples described above or below, wherein the pressure sensing module includes a capacitor that takes as an input the signal from the plurality of pressure sensors, the capacitor configured to be reset as part of the pressure sensing module to address voltage decay of the signal using a stored voltage offset.

In one or more examples, a trackpad system includes an outer surface configured to receive an application of pressure by an object and detect movement of the object in relation to the outer surface, the detected movement usable to control a cursor of a computing device; a pressure sensor and haptic feedback mechanism having a plurality of piezos that suspend the outer surface and are configured to detect and quantify an amount of the application of the pressure to the outer surface by the object, the pressure sensor and haptic feedback mechanism configured to output one or more signals indicating the quantified amount of the pressure; and a pressure sensing module configured to receive the one or more signals from the pressure sensors indicating the quantified amount of the pressure by the one or more piezos and control the haptic feedback of the haptic feedback mechanism by energizing the one or more piezos based at least in part of the quantified amount of pressure.

An example as described alone or in combination with any of the other examples described above or below, wherein the outer surface has a plurality of corners and the plurality of piezos are disposed at respective ones of the plurality of corners.

An example as described alone or in combination with any of the other examples described above or below, wherein the one or more signals are summed from the plurality of piezos.

An example as described alone or in combination with any of the other examples described above or below, wherein the one or more signals are received individually by the pressure sensing module from respective ones of the plurality of piezos.

An example as described alone or in combination with any of the other examples described above or below, wherein the individually received signals are usable to determine a relative location of the object in relation to the outer surface by the pressure sensing module.

An example as described alone or in combination with any of the other examples described above or below, wherein the individually received signals include bipolar voltages that are measured differentially using diodes of the pressure sensing module.

An example as described alone or in combination with any of the other examples described above or below, wherein the pressure sensing module includes a capacitor that takes as an input the signal from the pressure sensor, the capacitor is configured to be reset as part of the pressure sensing module to address voltage decay of the signal using a stored voltage offset.

In one or more examples, an input device includes an outer surface configured to receive an application of pressure by an object, a pressure sensor configured to detect and quantify an amount of the application of the pressure to the outer surface by the object, the pressure sensor configured to output a signal indicating the quantified amount of the pressure, a haptic feedback mechanism configured to provide haptic feedback using at least one piezo, and a pressure sensing module configured to receive the signal from the pressure sensors indicating the quantified amount of the pressure and control the haptic feedback of the haptic feedback mechanism by energizing the at least one piezo based at least in part of the quantified amount of pressure.

An example as described alone or in combination with any of the other examples described above or below, wherein the pressure sensor employs the at least one piezo of the haptic feedback mechanism to detect and quantify the amount of the application of the pressure.

An example as described alone or in combination with any of the other examples described above or below, wherein the haptic feedback mechanism includes a backer that deflects in response to a pulling motion of the at least one piezo due to the energizing of the at least one piezo.

An example as described alone or in combination with any of the other examples described above or below, further comprising a spacer configured to route the amount of pressure applied to the outer surface for application at a generally central region of the backer.

An example as described alone or in combination with any of the other examples described above or below, wherein the outer surface is formed as part of a trackpad that includes one or more sensors disposed thereon that are configured to detect proximity and movement of the object in relation to the outer surface.

An example as described alone or in combination with any of the other examples described above or below, wherein the at least one piezo is formed at least in part from a piezo ceramic material, PZT, electroactive polymer, or electromechanical polymer.

An example as described alone or in combination with any of the other examples described above or below, wherein the pressure sensing module includes a capacitor that takes as an input the signal from the pressure sensor, the capacitor is configured to be reset as part of the pressure sensing module to address voltage decay of the signal using a stored voltage offset.

Although the example implementations have been described in language specific to structural features and/or methodological acts, it is to be understood that the implementations defined in the appended claims is not necessarily limited to the specific features or acts described. Rather, the specific features and acts are disclosed as example forms of implementing the claimed features.

## Claims

1. An input device (104) comprising:
an outer surface (224, 308) configured to receive an application of pressure by an object;
means including a pressure sensor and haptic feedback mechanism (216, 218, 220, 222), said means comprising one or more piezos (314, 502, 504) configured to detect and quantify an amount of the application of the pressure to the outer surface (224, 308) by the object, wherein the one or more piezos (314, 502, 504) are configured to output one or more signals indicating the quantified amount of the pressure; and
a pressure sensing and haptic feedback module (116) configured to receive the one or more signals from the one or more piezos (314, 502, 504) indicating the quantified amount of the pressure and to control the haptic feedback of the pressure sensor and haptic feedback mechanism (216, 218, 220, 222) by energizing the one or more piezos (314, 502, 504) based at least in part on the quantified amount of pressure,
wherein the pressure sensing and haptic feedback module (116) includes a capacitor (402), **characterized in that**
the capacitor (402) is configured to take, as an input, the one or more signals from the plurality of piezos (314, 502, 504), wherein the capacitor (402) is configured to be reset to address voltage decay of the one or more signals using a stored voltage offset by the pressure sensing and haptic feedback module (116).

2. An input device (104) as described in claim 1, wherein the pressure sensor and haptic feedback mechanism (216, 218, 220, 222) includes a backer (312) configured to deflect in response to a pulling motion of the one or more piezos (314, 502, 504) due to the energizing of the one or more piezos (314, 502, 504).

3. An input device (104) as described in claim 2, further comprising a spacer (310) configured to route the amount of pressure applied to the outer surface (224, 308) for application at a central region of the backer (312).

4. An input device (104) as described in claim 1, wherein the outer surface (224, 308) is formed as part of a trackpad (114) that includes one or more sensors disposed thereon that are configured to detect proximity and movement of the object in relation to the outer surface (224, 308).

5. An input device (104) as described in claim 1, wherein the one or more piezos (314, 502, 504) are formed at least in part from a piezo ceramic material, PZT, electroactive polymer, or electromechanical polymer.

6. An input device (104) as described in claim 1, wherein the input device (104) is a trackpad (114) and the outer surface (224, 308) is further configured to detect movement of the object in relation to the outer surface (224, 308), the detected movement usable to control a cursor of a computing device (102).

7. An input device (104) as described in claim 6, wherein the outer surface (224, 308) has a plurality of corners and the one or more piezos (314, 502, 504) are disposed at respective ones of the plurality of corners.

8. An input device (104) as described in claim 6, wherein the one or more signals are summed from the one or more piezos (314, 502, 504).

9. An input device (104) as described in claim 6, wherein the one or more signals are received individually by the pressure sensing module from respective ones of the one or more piezos (314, 502, 504).

10. An input device (104) as described in claim 9, wherein the individually received signals are usable to determine a relative location of the object in relation to the outer surface (224, 308) by the pressure sensing module.

11. An input device (104) as described in claim 9, wherein the individually received signals include bipolar voltages that are measured differentially using diodes of the pressure sensing module.

## Patentansprüche

1. Eingabevorrichtung (104), umfassend:
eine Außenfläche (224, 308), die zum Empfangen eines Ausübens von Druck durch ein Objekt ausgelegt ist;
Mittel, enthaltend einen Drucksensor- und haptische Rückmeldung-Mechanismus (216, 218, 220, 222), wobei die Mittel einen oder mehrere Piezos (314, 502, 504) umfassen, die zum Erfassen und Quantifizieren einer Menge der Ausübung des Drucks auf die Außenfläche (224, 308) durch das Objekt ausgelegt sind, wobei das eine oder die mehreren Piezos (314, 502, 504) zum Ausgeben eines oder mehrerer Signale ausgelegt sind, die die quantifizierte Menge des Drucks angeben; und
ein Druckerfassungs- und haptische Rückmeldung-Modul (116), das zum Empfangen des einen oder der mehreren Signale von dem einen oder den mehreren Piezos (314, 502, 504), die die quantifizierte Menge des Drucks angeben, und zum Steuern der haptische Rückmeldung des Drucksensor- und haptischen Rückmeldungs-Mechanismus (216, 218, 220, 222) durch Erregen des einen oder den mehreren Piezos (314, 502, 504) zumindest teilweise auf der Grundlage der quantifizierten Menge des Drucks ausgelegt ist,
wobei das Druckerfassung- und haptische Rückmeldung-Modul (116) einen Kondensator (402) umfasst, **dadurch gekennzeichnet, dass** der Kondensator (402) zum Annehmen des einen oder der mehreren Signale von der Vielzahl von Piezos (314, 502, 504) als Eingabe ausgelegt ist, wobei der Kondensator (402) zum Zurücksetzen ausgelegt ist, um einen Spannungsabfall des einen oder der mehreren Signale unter Verwendung eines gespeicherten Spannungsoffsets des Moduls mit Druckerfassung und haptischer Rückmeldung (116) auszugleichen.

2. Eingabevorrichtung (104) nach Anspruch 1, wobei der mit Drucksensor- und haptische Rückmeldung-Mechanismus (216, 218, 220, 222) einen Rückhalter (312) enthält, der zum Ablenken als Reaktion auf eine Ziehbewegung des einen oder den mehreren Piezos (314, 502, 504) verursacht durch das Erregen des einen oder den mehreren Piezos (314, 502, 504) ausgelegt ist.

3. Eingabevorrichtung (104) nach Anspruch 2, weiterhin umfassend ein Zwischenstück (310), das zum Leiten der Menge an auf die Außenfläche (224, 308) ausgeübtem Druck zur Ausübung auf einem zentralen Bereich des Rückhalters (312) ausgelegt ist.

4. Eingabevorrichtung (104) nach Anspruch 1, wobei die Außenfläche (224, 308) als Teil eines Trackpads (114) ausgebildet ist, das einen oder mehrere darauf angeordnete Sensoren enthält, die zum Erfassen von Nähe und Bewegung des Objekts in Bezug auf die Außenfläche (224, 308) ausgelegt sind.

5. Eingabevorrichtung (104) nach Anspruch 1, wobei das eine oder die mehreren Piezos (314, 502, 504) mindestens teilweise aus einem Piezo-Keramikmaterial, PZT, einem elektroaktiven Polymer oder einem elektromechanischen Polymer ausgebildet ist/sind.

6. Eingabevorrichtung (104) nach Anspruch 1, wobei die Eingabevorrichtung (104) ein Trackpad (114) ist und die Außenfläche (224, 308) weiterhin zum Erfassen von Bewegung des Objekts in Bezug auf die Außenfläche (224, 308) ausgelegt ist, wobei die erfasste Bewegung zum Steuern eines Cursors einer Rechenvorrichtung (102) nutzbar ist.

7. Eingabevorrichtung (104) nach Anspruch 6, wobei die Außenfläche (224, 308) eine Vielzahl von Ecken aufweist und das eine oder die mehreren Piezos (314, 502, 504) an jeweils einer der Vielzahl von Ecken angeordnet ist/sind.

8. Eingabevorrichtung (104) nach Anspruch 6, wobei das eine oder die mehreren Signale von dem einen oder den mehreren Piezos (314, 502, 504) summiert wird/werden.

9. Eingabevorrichtung (104) nach Anspruch 6, wobei das eine oder die mehreren Signale einzeln von dem Druckerfassungsmodul von jeweils einem des einen oder der mehreren Piezos (314, 502, 504) empfangen wird/werden.

10. Eingabevorrichtung (104) nach Anspruch 9, wobei die einzelnen erfassten Signale zum Bestimmen eines relativen Orts des Objekts in Bezug auf die Außenfläche (224, 308) durch das Druckerfassungsmodul nutzbar sind.

11. Eingabevorrichtung (104) nach Anspruch 9, wobei die einzelnen erfassten Signale bipolare Spannungen enthalten, die differenziell unter Verwendung von Dioden des Druckerfassungsmoduls gemessen werden.

## Revendications

1. Dispositif d'entrée (104) comprenant :
une surface externe (224, 308) configurée pour recevoir une application de pression par un objet ;
un moyen comprenant un capteur de pression et un mécanisme de retour haptique (216, 218, 220, 222), ledit moyen comprenant un ou plusieurs éléments piézoélectriques (314, 502, 504) configurés pour détecter et quantifier une quantité d'application de pression sur la surface externe (224, 308) par l'objet, dans lequel le ou les éléments piézoélectriques (314, 502, 504) sont configurés pour délivrer un ou plusieurs signaux qui indiquent la quantité quantifiée de pression ; et
un module de détection de pression et de retour haptique (116) configuré pour recevoir le ou les signaux de la part du ou des éléments piézoélectriques (314, 502, 504) qui indiquent la quantité quantifiée de pression, et pour contrôler le retour haptique du capteur de pression et le mécanisme de retour haptique (216, 218, 220, 222) en mettant sous tension le ou les éléments piézoélectriques (314, 502, 504) sur la base au moins en partie de la quantité quantifiée de pression,
dans lequel
le module de détection de pression et de retour haptique (116) comprend un condensateur (402), **caractérisé en ce que**
le condensateur (402) est configuré pour prendre, en guise d'entrée, le ou les signaux issus de la pluralité d'éléments piézoélectriques (314, 502, 504), dans lequel le condensateur (402) est configuré pour être réinitialisé afin de gérer la baisse de tension du ou des signaux en utilisant un écart de tension stocké par le module de détection de pression et de retour haptique (116).

2. Dispositif d'entrée (104) selon la revendication 1, dans lequel le capteur de pression et le mécanisme de retour haptique (216, 218, 220, 222) comprennent un moyen de support (312) configuré pour s'écarter en réponse à un mouvement de traction du ou des éléments piézoélectriques (314, 502, 504) en raison de la mise sous tension du ou des éléments piézoélectriques (314, 502, 504).

3. Dispositif d'entrée (104) selon la revendication 2, comprenant en outre un espaceur (310) configuré pour acheminer la quantité de pression appliquée sur la surface externe (224, 308) en vue de son application au niveau d'une zone centrale du moyen de support (312).

4. Dispositif d'entrée (104) selon la revendication 1, dans lequel la surface externe (224, 308) est formée dans le cadre d'un pavé tactile (114) qui comprend un ou plusieurs capteurs disposés dessus, qui sont configurés pour détecter la proximité et le mouvement de l'objet par rapport à la surface externe (224, 308).

5. Dispositif d'entrée (104) selon la revendication 1, dans lequel le ou les éléments piézoélectriques (314, 502, 504) sont formés au moins en partie avec un matériau piézo-céramique, PZT, un polymère électro-actif, ou un polymère électromécanique.

6. Dispositif d'entrée (104) selon la revendication 1, dans lequel le dispositif d'entrée (104) est un pavé tactile (114) et la surface externe (224, 308) est en outre configurée pour détecter le mouvement de l'objet par rapport à la surface externe (224, 308), le mouvement détecté pouvant être utilisé pour contrôler un curseur d'un dispositif informatique (102).

7. Dispositif d'entrée (104) selon la revendication 6, dans lequel la surface externe (224, 308) possède une pluralité d'angles et le ou les éléments piézoélectriques (314, 502, 504) sont disposés au niveau de la pluralité d'angles respectifs.

8. Dispositif d'entrée (104) selon la revendication 6, dans lequel le ou les signaux sont additionnés à partir du ou des éléments piézoélectriques (314, 502, 504).

9. Dispositif d'entrée (104) selon la revendication 6, dans lequel le ou les signaux sont reçus individuellement par le module de détection de pression de la part du ou des éléments piézoélectriques respectifs (314, 502, 504).

10. Dispositif d'entrée (104) selon la revendication 9, dans lequel les signaux reçus individuellement peuvent être utilisés pour déterminer un emplacement relatif de l'objet par rapport à la surface externe (224, 308) par le module de détection de pression.

11. Dispositif d'entrée (104) selon la revendication 9, dans lequel les signaux reçus individuellement comprennent des tensions bipolaires qui sont mesurées de manière différentielle à l'aide de diodes du module de détection de pression.
